# EUROPEAN PATENT APPLICATION

(11) **EP 4 477 353 A1**
(43) Date of publication of application: **18.12.2024**
(21) Application number: 24180803.9
(22) Date of filing: 07.06.2024
(51) Int. Cl.: B24B 7/22, B24B 7/26, B24B 27/00, B24B 9/00, B23Q 15/16, B24B 9/06, B24B 47/25, B24B 49/00, B24B 49/16, B24B 49/18, G05B 19/404, B24B 49/10

(54) **MACHINE FOR RECTIFYING PANELS FOR CONSTRUCTION, FOR EXAMPLE, FOR WALL COVERINGS OR FOR FLOORINGS**

(30) Priority: 14.06.2023 IT 202300012228
(71) Applicant: Errevi Automation S.r.l., 41043 Formigine (MO) (IT); Keda Europe S.r.l., 41053 Maranello (MO) (IT)
(72) Inventor: MALAGOLI, Paolo, 41053 Maranello (MO) (IT); VANDELLI, Massimo, 41043 Formigine (MO) (IT)
(74) Representative: Provvisionato, Paolo

(57) **Abstract**

A machine for rectifying panels for construction, for example, for wall coverings or for floorings, comprises a structure for supporting and moving panels in a supply direction (L). The machine further comprises at least one rectification tool (11) which is configured to operate on the panels and at least one movement mechanism (40) for adjusting the position of the rectification tool with respect to the supply direction (L) in an adjustment direction (T) in order to compensate for the progressive wear of the rectification tool (11) in contact with the panels. The machine also comprises at least one vibration sensor (64) which is provided to detect the vibrations of the at least one rectification tool (11) during use, during the contact with the panels. A data-processing system is programmed to receive the vibration data which are detected, during use, by the vibration sensor (64) and to compare them with reference vibration data which indicate a predetermined working condition of the rectification tool in contact with the panels, which corresponds to a predetermined position of the rectification tool with respect to the supply direction (T). The processing system outputs an adjustment activation instruction in order to activate the movement mechanism (40) in order to move the rectification tool in the adjustment direction (T) when a predetermined deviation between the vibration data which are detected by the vibration sensor with respect to the reference vibration data is exceeded. The processing system further outputs an adjustment deactivation instruction in order to deactivate the movement mechanism (40) in order to interrupt the movement of the rectification tool in the adjustment direction (T) when the deviation between the vibration data detected by the vibration sensor and the reference vibration data is within a predetermined value.

## Description

### Field of the invention

The present invention relates to the field of machines for rectifying panels for construction, for example, for wall coverings or for floorings.

The invention has been developed with particular regard for panels made of ceramic material or stone, such as tiles and panels made of ceramic material, stone, marble, stoneware, porcelain and the like, and a machine for rectifying such panels, with particular reference to the rectification of opposite edges of such panels.

### Technological background

In the field of constructions, wall coverings or floorings are commonly constructed by means of panels of various types, often made of a stone or ceramic material, panels and tiles made of ceramic material or stone, marble, stoneware, porcelain and similar materials, which are appreciated for their qualities of resistance and decorative effects. The panels generally have a regular polygonal form and mainly a square or rectangular form. The production of the panels from stone or ceramic material provides initially for the construction of a coarse product which then has to be refined before being marketed. Among the refining operations, particular importance is attributed to the rectification of the edges of the panel which allows panels to be obtained with predetermined dimensions, with rectilinear edges and a precise shape. In the case of square or rectangular panels or tiles, it is particularly important that the opposite edges are parallel and the adjacent edges are precisely squared.

In order to carry out the finishing of these products, it is known to use machines for rectifying the opposite edges of the panels. These rectifying machines provide for removing material at opposite sides of the panels in order to make them completely rectilinear and parallel with respect to each other. In this manner, the resultant panels with, for example, a square or rectangular shape, have dimensional and geometric tolerances which are quite strict, which allows regular paved areas to be produced by placing, as known, the panels one alongside the other.

Generally, the rectifying machines used for this purpose are provided with a carrying structure with a movement system for the panels in an advance direction. The panels are transported by means of two rows of rectifying grinding wheels which are arranged so as to be equidistant from a centre axis of the machine which is parallel with the advance direction of the panels. During the advance thereof, the panels successively encounter the various grinding wheels which gradually remove the excess material thereof from the edges until bringing the edge thereof to a predetermined dimension. The grinding wheels are rotated by motorized groups about an axis which is arranged orthogonally to the advance direction of the panels. In the machines of the known type, for example, for rectifying ceramic tiles, there are provided, for example, ten or twelve grinding wheels per side, of which the last three or four in the advance direction of the tile are generally dedicated to calibrating the edge precisely while the other grinding wheels are dedicated to a gradual rectification of the edge in preparation for the precise calibration which is carried out by the last grinding wheels of the row.

During the processing of the edges of the panels, the grinding wheels are subjected to gradual wear which has to be compensated for with an adjustment which gradually brings the grinding wheels up to the edges of the panels so as to be able to continue to remove material from the edges of the panels in the predetermined quantity and manner until it is necessary to completely replace the grinding wheel. The conventional system for adjusting the position of the grinding wheels is of the completely manual type, by using screw type systems which are actuated by handwheels. This system requires a substantial level of experience from the operators and does not ensure an adequate quality of the finished product and a repeatability of the rectification procedure. Another problem involves the occurrences of play in the adjustment system which, for example, do not allow a precise calibration of the initial zero position to be obtained when a new grinding wheel is mounted. This disadvantage, which is common to the adjustment of all the grinding wheels of the machine, is particularly significant for the final grinding wheels which are intended for the precise calibration of the edge of the panel and which have to be adjusted more often in order to ensure a high level of dimensional precision of the finished panels.

In order to at least partially overcome the disadvantages of the manual adjustment, there have been proposed solutions which allow the adjustment of the transverse position of the grinding wheels to be automated with respect to the advance direction of the panels. EP 2542381 describes an automatic adjustment system for the position of the grinding wheels in a rectification machine for the edges of tiles, which provides for projecting a light beam parallel with the supply direction of the tiles. The light beam defines the predefined working position of the grinding wheels with respect to the edges of the tiles to be rectified. In order to compensate for the wear of the grinding wheels, they are caused to advance transversely relative to the advance direction of the panels in a direction towards the centre of the machine until intercepting the light beam. The movement of the grinding wheels is controlled by an electronic control unit which is configured to receive a signal corresponding to the reception (or not) of the light beam. The control unit controls the advance of the grinding wheels until it receives a signal that the light beam has been interrupted, which signals the reference position for correct operation of the grinding wheel has been reached.

The adjustment system described in EP 2542381 has the disadvantage of being able to adjust only one grinding wheel at a time. In fact, when the light beam which is common to all the row of grinding wheels at one of the sides of the rectification machine is interrupted by the advance of a grinding wheel, thereby signalling that the reference position of the grinding wheel itself has been reached, it is no longer possible to detect the interception thereof by another. Therefore, it is necessary for the light beam to be reset by moving the grinding wheel which has intercepted it backwards slightly so that it is possible to detect the interruption of the light beam by another grinding wheel to be adjusted. It is further difficult, if not impossible, to adjust the grinding wheels during the operation of the rectification machine because the working environment, which is highly dusty, can interfere with the correct operation of the detection actions of the light beam.

### Statement of invention

A primary object of the present invention is to overcome the disadvantages of the prior art by providing an automatic adjustment system which is precise and reliable of the position of the working tools of a machine for rectifying plates for construction of the type indicated in the introduction.

Another object of the invention which may be pursued independently of the preceding object is to provide an automatic adjustment system of the working tools of a machine for rectifying panels which allows the simultaneous adjustment of a plurality of tools, including ones belonging to the same row of tools which are aligned along one side of the machine in order to rectify the same panel edge.

Another object of the invention which may be pursued independently of the preceding objects is to provide a machine for rectifying panels for construction which has a regularity and precision of operation and a considerable repeatability of the rectification results of the panels for achieving an edge with the precise calibre.

Another object of the invention which may be pursued independently of the preceding objects is to provide a rectification machine which is simple to use and which can optimize the use of the rectification grinding wheels.

Another object of the invention which may be pursued independently of the preceding objects is to provide a rectification machine of the type indicated above which does not require the assistance of specialist operators for adjusting the working tools.

Another object of the invention which may be pursued independently of the preceding objects is to provide a machine for rectifying panels which reduces the machine downtimes and which ensures constant and relatively high production of rectified panels for construction.

These objects and other objects which will be appreciated more clearly from the following description are achieved by the invention which is defined in the appended claims.

According to a first aspect, there is described a machine for rectifying panels for construction, for example, for wall coverings or for floorings. The machine may comprise a structure for supporting and moving panels in a supply direction. The machine comprises at least one rectification tool which is configured to operate on the panels, particularly during the movement thereof in the supply direction. The rectification tool may be moved in an adjustment direction by means of a corresponding movement mechanism which provides for adjusting the position of the rectification tool, with particular respect to the supply direction, in order to compensate for the progressive wear of the rectification tool during continuous contact thereof with the panels which are gradually rectified. It is then described how it is possible to provide at least one vibration sensor which detects the vibrations of the rectification tool during contact with the panels. This machine comprises or is associated with a data-processing system, for example, an electronic processor, such as a computer, a portable processing device, a server, a cluster of servers or computers, a cloud processing service, a grid system of another system which is generally known for processing data. The data-processing system is programmed to receive the vibration data which are detected, during use of the machine and particularly of the at least one rectification tool, by the vibration sensor and to compare them with reference vibration data. The reference data indicate a predetermined working condition of the rectification tool in contact with the panels, corresponding to a predetermined position of the rectification tool with respect to the supply direction. In other words, the reference data correspond to the typical vibration which is detected by the vibration sensor when the rectification tool operates under optimum conditions on the panel, for example, in order to remove a predetermined portion of material from the edge thereof during the rectification operation thereof.

The data-processing system is programmed to output an adjustment activation instruction. This is an instruction which brings about the activation of the movement mechanism for the rectification tool. Following this instruction which is imparted by the data-processing system, the rectification tool is moved in the adjustment direction so as to approach the panels and to compensate for the wear on the tool. This adjustment activation instruction is imparted when a first predetermined deviation of the vibration data which are detected by the vibration sensor with respect to the reference vibration data is exceeded.

The data-processing system is further programmed to output an adjustment deactivation instruction. In this case, this is an instruction which brings about the deactivation of the movement mechanism of the rectification tool. Following this instruction which is imparted by the data-processing system, the movement of the rectification tool is interrupted in the adjustment direction. This adjustment deactivation instruction is imparted when the deviation between the vibration data detected by the vibration sensor and the reference vibration data is within a second predetermined deviation. The first predetermined deviation, exceeding which brings about the output of the adjustment activation instruction, may be equal to or, preferably, greater than the second predetermined deviation which brings about the adjustment deactivation so as to determine a tolerance range of the vibration values which are detected without there being an intervention of the movement mechanism. However, nothing prevents the system from being programmed so that the adjustment of the position of the rectification tool for compensating for the wear thereof is continuous or virtually continuous.

The advantage of a configuration of the machine and the relevant data-processing system is evident both with reference to the single rectification tool, which can be controlled in a regular manner, constantly being advanced, except for during the zero-setting which is necessary for the tool change, so that the mechanical play, once recovered in the initial position, does not influence the precision of the positioning of the rectification tool.

The advantages are also greater when the machine comprises a plurality of rectification tools, each of which can be moved independently of the others in the adjustment direction. In this case, it is possible to provide each rectification tool with an individual corresponding vibration sensor which is provided to detect the vibrations thereof and to transmit the corresponding vibration data to the data-processing system. The various rectification tools can therefore be controlled individually in order to recover the individual occurrences of wear with the result of more accurate processing over the entire row of tools, with which a rectification machine of the type indicated in the introduction is usually provided. Particularly advantageous is the fact that the various rectification tools can be adjusted simultaneously, thereby overcoming the limitations of the prior art.

According to another aspect, it is described how the rectification tool can be actuated by a corresponding electric motor and how this motor can integrate additional control of the adjustment of the verification tool. In this case, it is possible to provide the data-processing system because it receives the absorption data of the electric motor. The data-processing system can therefore be configured to output the above-mentioned adjustment activation instruction if the absorption of the electric motor is less than a predetermined absorption threshold. Additionally or alternatively, the data-processing system can be configured to output the above-mentioned adjustment interruption instruction when a predetermined absorption threshold is exceeded by the electric motor for actuating the rectification tool.

According to a particular aspect, it is possible to configure the data-processing system so as to combine, as a result, for example, of a predetermined algorithm, the vibration data which are detected by the vibration sensor and the absorption data of the electric motor of the same rectification tool. The data-processing system can therefore compare the result of this combination, which is acquired in real time from the machine, with the combination, which is produced, for example, with the same algorithm, of the reference vibration data and reference absorption data, which indicate the above-mentioned predetermined working condition of the rectification tool in contact with the panels.

According to another aspect, it is particularly advantageous to mount the vibration sensor on the movement mechanism of the rectification tool and particularly but not exclusively on the movement motor of this mechanism in the adjustment direction or in another position in which the vibration effects resulting from the interaction of the rectification tool with the panel being processed are particularly extensive and can be detected with reduced influence of vibrations which are spurious, in the background or result from other causes.

According to a different aspect, the movement mechanism comprises a gear mechanism of the type with a helical toothed wheel and endless screw. In addition to the advantage provided by the irreversible kinematics of such a gear mechanism, as a result of which the thrusts applied by the contact between the rectification tool and the panel do not compromise the positioning of the tool itself in the adjustment direction, it is possible to obtain a precision to within one hundredth of a millimetre during the adjustment of the rectification tool, which is all to the advantage of the repeatability and production quality. According to a particularly advantageous aspect for strengthening the structure of the motorized control and movement group of the rectification tool, the helical toothed wheel is formed on the external covering of a tubular metal pipe which is coaxial with a cylindrical member which is connected with screws to the tubular metal pipe and is movable in the adjustment direction. This cylindrical member supports in terms of rotation a shaft which in turn supports the rectification tool which is connected to a motor which is supported by the cylindrical member.

According to a different aspect, there is described a method for adjusting the position of at least one rectification tool of a machine for rectifying panels for construction, for example, for wall coverings or for floorings. The method for application to a machine in which the rectification tool is configured to operate on the panels and is movable in an adjustment direction in order to compensate for the progressive wear of the tool in contact with the panels. Furthermore, the machine comprises at least one vibration sensor which is associated with the at least one rectification tool. The method advantageously comprises the steps of:
- detecting via the at least one vibration sensor the vibrations of the at least one rectification tool during use, during the contact with the panels,
- comparing the vibration data which are thereby detected with reference vibration data which indicate a predetermined working condition of the rectification tool during contact with the panels, corresponding to a predetermined position of the rectification tool,
- outputting an adjustment activation instruction for moving the rectification tool in the adjustment direction towards the panels when a first predetermined deviation between the vibration data which are detected by the vibration sensor with respect to the reference vibration data is exceeded, and
- outputting an adjustment deactivation instruction for interrupting the movement of the rectification tool in the adjustment direction when the deviation between the vibration data which are detected by the vibration sensor and the reference vibration data is within a second predetermined deviation.

The first predetermined deviation may be identical to or, preferably, greater than the second predetermined deviation for the reasons seen above.

According to a particularly advantageous aspect, the method may comprise the additional step of detecting the absorption of an electric actuation motor for the at least one rectification tool so as to output the adjustment activation instruction if the absorption of the electric motor is less than a predetermined absorption threshold and/or to output the adjustment interruption instruction if a predetermined absorption threshold is exceeded.

According to another particular aspect, the vibration data which are detected by the at least one vibration sensor and the absorption data of the electric motor of the same rectification tool are combined in a predetermined manner and compared with a value resulting from a corresponding combination of the reference vibration data and reference absorption data which indicate the predetermined working condition of the rectification tool in contact with the panels.

There is further described the possibility of providing an electronic processor which is configured to carry out the method above in a machine for rectifying panels for construction.

### Brief description of the drawings

Additional features and advantages will become evident from the following detailed description of a preferred embodiment with reference to the appended drawings which are provided by way of non-limiting example and in which:
- Figure 1 is a perspective view of a machine for rectifying the edges of panels, incorporating aspects of the present invention;
- Figure 2 is a perspective view of a motorized group for supporting a rectification grinding wheel of the machine of Figure 1;
- Figure 3 is a longitudinal section of the motorized group which is taken along a horizontal plane passing through the axis III-III in Figure 2;
- Figure 4 is a cross-section of the motorized group taken along the line IV-IV of Figure 3; and
- Figure 5 is another cross-section of the motorized group taken along the line V-V of Figure 3.

### Detailed description

In the following embodiments, there are described features which allow the invention to be carried out. The features described can be combined with each other in various manners and are not necessarily limited to the precise embodiment to which the drawings and the relevant description refer. In other words, a person skilled in the art in the sector who reads the following description will know how to obtain the information items which are useful for knowing the way to carry out one or more of the features described by combining it with one or more of the other features described without the particular formulation of the description, the paragraphs, phrases or drawings constituting a limitation on the possibility of isolating one or more of the features described and illustrated in order to combine them with one or more of any of the other features described and illustrated. In greater detail, in the present description any combination of any two features expressly described must be understood to be expressly described even if the features are individually taken from the specific context in which they can be beside or combined with other different features, taking into account the competences and knowledge of a person skilled in the art in the sector who understands the possibility of functionally combining the features without it being necessary to functionally apply other, different features. Unless otherwise specified, each and any element, member, means, system, component, object described and illustrated in the present description must be understood to be individually described and autonomously modifiable and able to be separated from and/or combined with each and any other element, member, means, system, component, object described and illustrated. The materials, forms and functions described and illustrated do not limit the present invention but are only specified in order to enable a person skilled in the art to understand and carry out the invention according to preferred but non-limiting embodiments.

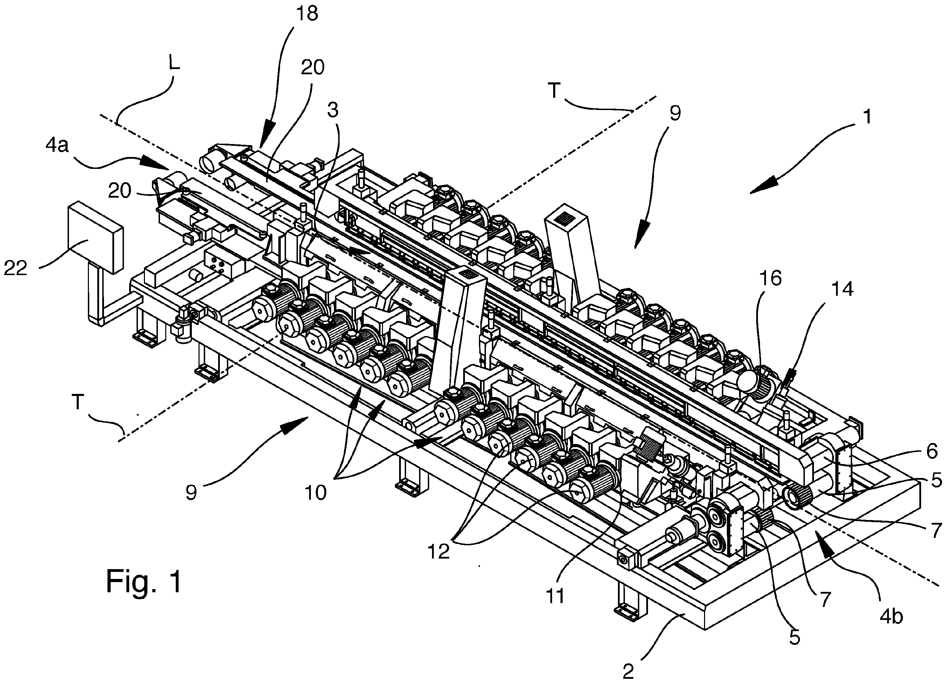

Now with reference to Figure 1, a machine 1 for rectifying panels is illustrated as a perspective view. The machine 1 is particularly intended to rectify opposite edges of panels which can be used, for example, for wall coverings or for floorings, such as tiles, paving blocks or panels made of ceramic material, stone, marble, stoneware, porcelain, and the like.

The machine 1 comprises a support structure 2, on which there are mounted advance members 3 which support a series of panels (not illustrated in the Figures) so as to supply them sequentially in a longitudinal direction L from an inlet 4a to an outlet 4b of the machine 1. In the example of Figure 1, the advance members 3 comprise at least one pair of lower flexible elements 5, on which there are superimposed a pair of upper flexible elements 6 of the type of belts, webs or the like, which are closed about themselves in a ring-like manner and each of which is wrapped at least partially around two actuation wheels 7 and can be arranged in contact with opposite faces of the panel to be rectified in order to pull it in advance in the longitudinal direction L.

There are arranged along the sides of the machine 1, in a state aligned parallel with the longitudinal direction L, processing members 9 which interact with two opposite sides of the panels which are moved by the advance members 3. The processing members 9 comprise two opposite rows of rectification grinding wheels 10 which are actuated in order to laterally rectify the panels which are transported in the longitudinal direction L.

The rectification grinding wheels 10 each comprise a grinding wheel member 11 which is rotated about a substantially horizontal axis which is orthogonal to the longitudinal direction L in order to rectify the opposite edges of the panels. The grinding wheel members 11 are connected to corresponding motorized groups 12 which comprise a movement system for moving the rectification grinding wheels 10 towards and away from the centre of the machine 1 in transverse directions T relative to the longitudinal direction L. There are arranged in the machine 1 automated adjustment means which are described in greater detail below and which are suitable for adjusting the transverse position of the lateral rectification grinding wheels 10 with respect to the longitudinal direction, as will be set out in greater detail below.

The processing members 9 may further comprise chamfering grinding wheels 14 which are arranged at the sides of the machine 1, downstream of the respective rows of rectifying grinding wheels 10, and which are rotated about an oblique axis with respect to the plane of the panels by means of a corresponding control motor 16.

A centring system 18 for correctly positioning the panels to be rectified is provided at the inlet 4a of the machine 1.

The centring system 18 comprises two opposite sides 20 which can be actuated so as to move towards and apart from each other in a synchronized manner with respect to the middle of the machine 1. The operation of the machine 1 is controlled by an electronic system, the working parameters of which can be displayed and where applicable modified by means of a control panel 22.

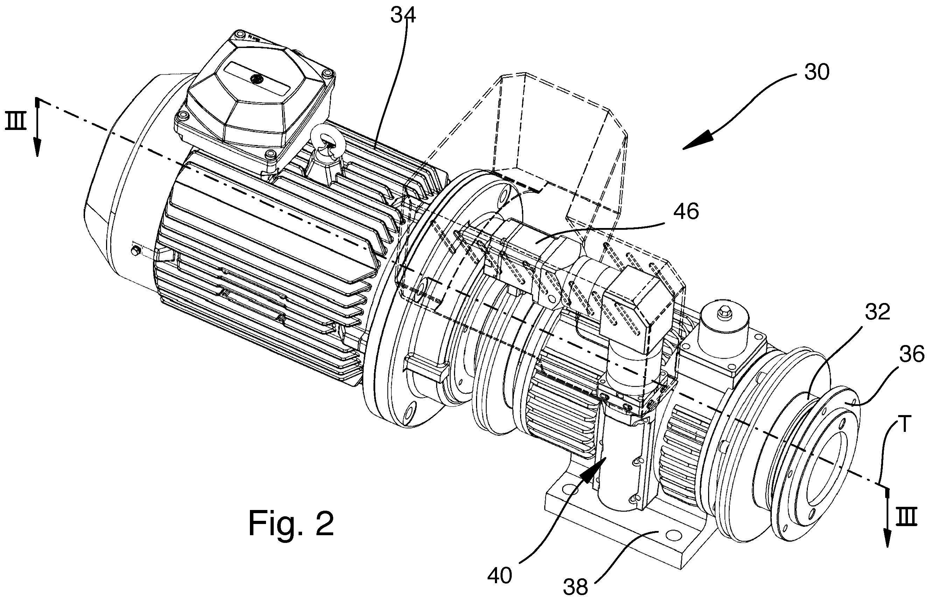

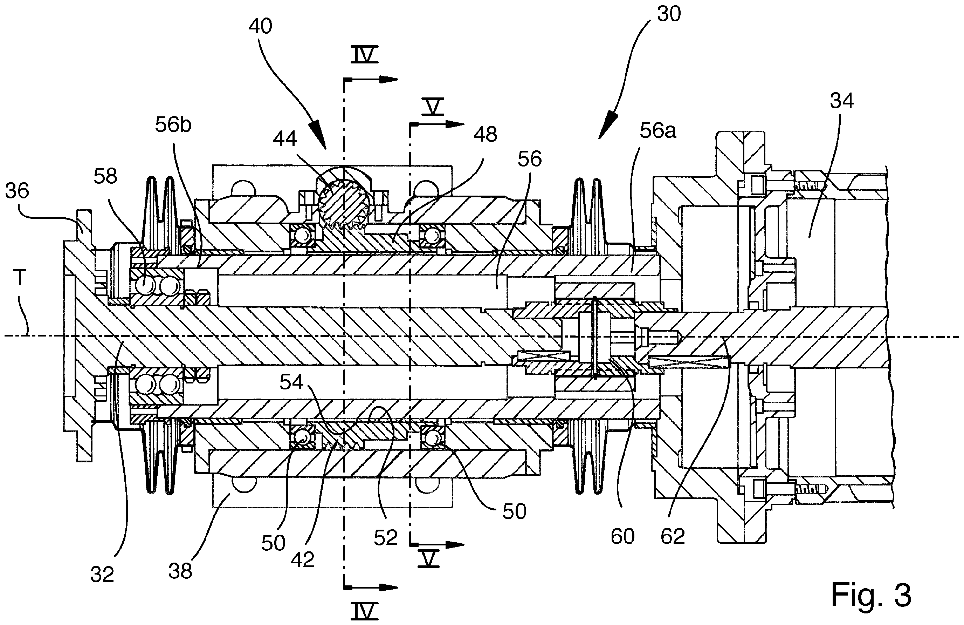

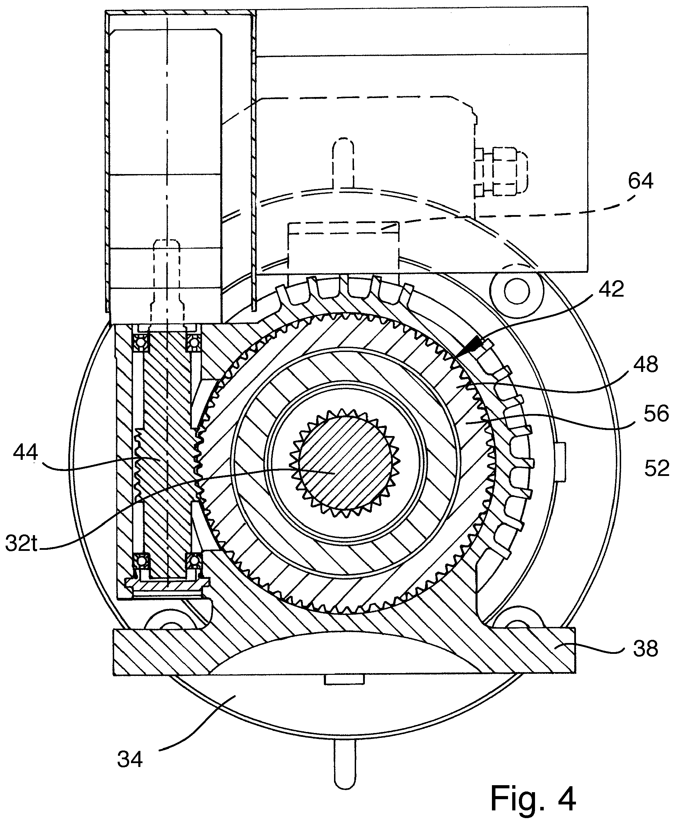

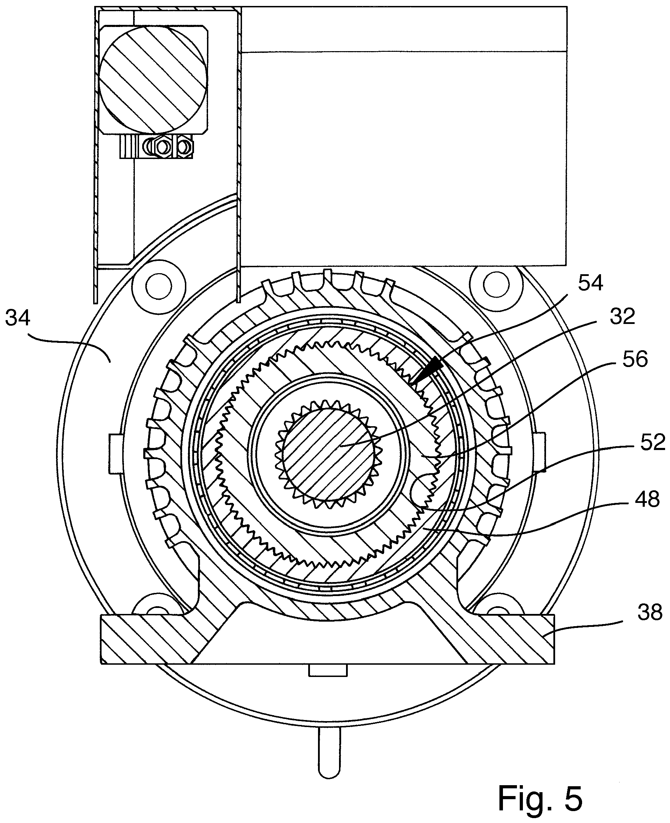

Figures 2 to 5 illustrate a motorized group 30 for moving a grinding wheel member 11. The motorized group 30 comprises a grinding-wheel-carrying shaft 32 which is rotated by an electric motor 34. At the end of the grinding-wheel-carrying shaft 32 there is fixed a flange 36 for connecting the grinding wheel member in known manner. The motorized group 30 is mounted on the support structure 2 of the machine 1 by means of a support 38 with the interposition of a mechanism 40 for adjusting the position of the grinding-wheel-carrying shaft 32 in the transverse direction T which, as can be seen in Figure 3, is parallel with the longitudinal axis of the motorized group 30. As can better be seen in Figures 3 and 4, the mechanism 40 comprises a gear mechanism of the type with a helical toothed wheel 42 and an endless screw 44. The endless screw 44 is controlled by a motor 46. The helical toothed wheel 42 is formed on the external covering of a cylindrical metal pipe 48 which is supported in terms of rotation by bearings 50. The cylindrical metal pipe 48 in turn has a nut 52 which engages with a screw 54 and which is formed on the external wall of a cylindrical member 56. The cylindrical member 56 is mounted so as to slide on the support 38 so as to be able to move in the direction T following the rotation of the nut 52. The body of the motor 43 is mounted at one end 56a of the cylindrical member 56. The other end 56b of the cylindrical member 56 supports in terms of rotation, by means of bearings 58, the shaft 32 near the flange 36. Inside the cylindrical member 56, there is also received a joint 60 of generally known type which connects the shaft 62 of the electric motor 34 and the grinding-wheel-carrying shaft 32.

There is mounted on the motorized group 30 at least one vibration sensor 64 which in Figure 4 is schematically shown merely by way of example. The position of the vibration sensor 64 is not therefore necessarily the one illustrated, being able to be mounted in any other position on the motorized group 30 where it is possible to detect with a specific sensitivity the vibration of the motorized group 30 which is brought about by the contact between the rectifying grinding wheel which is mounted in an overhanging manner at the end of the grinding-wheel-carrying shaft 32 and the edge of the panels which are rectified. The vibration sensor 64 can therefore be mounted on the support structure 38 of the motorized group 30 or, more preferably, on the cylindrical member 56 which supports the grinding-wheel-carrying shaft 32 in terms of rotation. In some embodiments, the vibration sensor can be mounted on the cylindrical member 56 near the bearings 58 which support the grinding-wheel-carrying shaft 32 in terms of rotation near the overhanging end thereof which carries, on the flange 36 or other equivalent connection system, the rectifying grinding wheel 11. In other embodiments, the vibration sensor is mounted on the auxiliary motor 46 for actuating the mechanism for adjusting the position of the motorized group 30 in the adjustment direction T.

The vibration sensor 64 comprises, in the simplest cases, at least one accelerometer, for example, an accelerometer with one or more axes. In other cases, the vibration sensor 64 may comprise at least one inductive sensor (with interference currents) which directly detects the vibrations of the grinding-wheel-carrying shaft 32. Other implementations of the vibration sensor 64 can use, for example, optical sensors. Naturally, it is also possible to mount on the motorized group 30 more than one vibration sensor 64, for example, a series of vibration sensors which are calibrated to specific frequencies or bands of frequencies.

The vibration sensor 64 is connected to an electronic control system which detects in real time the vibration brought about on the motorized group by the contact of the rectifying grinding wheel with the panel being rectified. The electronic control system acquires the vibration data which are transmitted by the vibration sensor 64 of each motorized group and transmits them to a processing system with a software application for collecting and analysing such data in real time, during the operation of the machine 1.

The data acquired are processed in order to form, for example, a characteristic impression of the vibration of the motorized group 30 which is compared with a reference impression which is stored beforehand in the processing system, corresponding to the vibration brought about by the contact between the rectifying grinding wheel and the edge of a panel during the removal of a predefined desired quantity of material. In the processing system, there can be imposed parameters which relate to the deviation of the impression detected with respect to the reference impression and which, when exceeded, enable the processing system to impart an instruction to the electronic control system in order to move the position of the motorized group, and particularly the rectifying grinding wheel, in the direction T towards the middle of the machine 1.

More specifically, when the processing system detects that the impression acquired by the vibration sensor 64 is not included within the tolerance range which is predefined with respect to the reference impression, for example, because the extent of the vibration decreases and/or changes the frequency of vibration following the wear of the rectifying grinding wheel which no longer removes the required quantity of material from the edge of the panel, the processing system can impart an instruction to move the rectifying grinding wheel towards the edge of the panel, controlling the approach thereof towards the middle of the machine 1 in the transverse direction T (or other predetermined direction of approach in accordance with the specific configuration of the machine 1 and the motorized groups 30). In the case of the example illustrated in the Figures, the processing system sends an instruction to the electronic control system of the motorized group in order to activate the motor 46 for controlling the endless screw 44. The rotation of the endless screw 44 consequently brings about the rotation of the cylindrical metal pipe 48 which in turn urges the cylindrical member 56 in the desired direction of approach of the rectifying grinding wheel towards the edge of the panel to be rectified. The movement can be of a predetermined quantity, with control in an open chain manner, or may be interrupted when the processing system detects that the vibration impression acquired by means of the vibration sensor 64 is within a second predetermined tolerance range which is normally stricter than the tolerance range which causes the adjustment to be initiated.

The electronic control system may further be configured to detect the absorption of the electric motor 34 which controls the grinding wheel of each motorized group 30. Using these data, it is possible to detect an absorption less than a given threshold which may indicate a pressure less than what is due at the edge of the panel in the operating condition of contact of the grinding wheel with the material of the panel. Conversely, higher absorption of a given value may indicate an excessively high contact of the grinding wheel with the panel being rectified or other operating anomalies of the motorized group. These absorption data can be used to improve the control of the motorized group 30 and/or the grinding wheel 11, for example, by contributing to controlling the approach of the grinding wheel towards the panel to be rectified if the absorption is less than a given threshold and the vibration sensor in any case detects that the grinding wheel is in contact with the panel being rectified. Conversely, if the absorption exceeds a predetermined value, the motorized group can be initially moved away from the panel being rectified in order to avoid damage to the panel or the motorized group or the grinding wheel itself. If the absorption were to remain high, the system could output an alarm and interrupt the processing operation, signalling an anomaly in order to allow the intervention or checking by an operator.

In an advantageous embodiment, the vibration data which are detected by the at least one vibration sensor and the absorption data of the motor of the motorized group can be combined in accordance with a predetermined algorithm so as to obtain an aggregated data item to be compared with a corresponding aggregated value which is obtained by combining the reference vibration and absorption values corresponding to an optimum operating condition of the motorized group and the relevant rectifying grinding wheel.

The acquisition system of the reference impression can make advantageous use of the techniques of training and artificial intelligence starting from analysis of the processing data of reference panels, which are advantageously carried out beforehand by the manufacturer of the machine 1. The reference impressions may vary in accordance with the type of panels being processed, and also with the type of grinding wheel mounted on the motorized group, and the motorized group itself, it being possible to carry out individual control operations for each motorized group of each row which is mounted on-board the machine 1, for example, distinguishing between roughening grinding wheels and finishing grinding wheels.

The control by means of a helical toothed wheel and endless screw allows the rectifying grinding wheel to be moved towards the edge of the panel with a very high degree of precision, at the same time ensuring a high level of rigidity of the movable system of the motorized group 30, all to the advantage of the processing precision of the edge of the panel.

Naturally, the principle of the invention remaining the same, the forms of embodiment and details of construction may be varied widely with respect to those described and illustrated without thereby departing from the scope of the present invention.

## Claims

1. A machine for rectifying panels for construction, such as panels and tiles for wall coverings or for floorings, comprising:
- a structure for supporting and moving panels in a supply direction (L),
- at least one rectification tool (11) which is configured to operate on the panels which are moved in the supply direction (L),
- at least one movement mechanism (40) of the at least one rectification tool in an adjustment direction (T) for adjusting the position of the rectification tool with respect to the supply direction (L) in order to compensate for the progressive wear of the rectification tool (11) in contact with the panels,
- at least one vibration sensor (64) which is provided to detect the vibrations of the at least one rectification tool (11) during use, during the contact of the rectification tool with the panels,
- a data-processing system programmed to receive the vibration data which are detected, during use of the at least one rectification tool (11), by the vibration sensor (64) and to compare them with reference vibration data which indicate a predetermined working condition of the rectification tool in contact with the panels, corresponding to a predetermined position of the rectification tool with respect to the supply direction (T),
wherein the processing system:
- outputs an adjustment activation instruction in order to activate the movement mechanism (40) for moving the rectification tool in the adjustment direction (T) when a first predetermined deviation of the vibration data which are detected by the vibration sensor with respect to the reference vibration data is exceeded, and
- outputs an adjustment deactivation instruction in order to deactivate the movement mechanism (40) in order to interrupt the movement of the rectification tool in the adjustment direction (T) when the deviation between the vibration data detected by the vibration sensor and the reference vibration data is within a second predetermined deviation.

2. A machine for rectifying panels for construction according to claim 1, comprising a plurality of rectification tools (11), each being independently movable in the adjustment direction (T) and each being provided with at least one corresponding vibration sensor (64) which is provided to detect the vibrations of the corresponding rectification tool (11) and to transmit the corresponding vibration data to the data-processing system.

3. A machine for rectifying panels for construction according to claim 1 or claim 2, wherein the at least one rectification tool (11) is actuated by a corresponding electric motor, the data-processing system being provided to receive the absorption data of the electric actuation motor of the at least one rectification tool (11) and to output the adjustment activation instruction if the absorption of the electric motor is less than a predetermined absorption threshold and/or to output the adjustment interruption instruction when a predetermined absorption threshold is exceeded.

4. A machine for rectifying panels for construction according to claim 3, wherein the data-processing system combines in a predetermined algorithm the vibration data which are detected by the at least one vibration sensor (64) and the absorption data of the electric motor of the same rectification tool, comparing the result of the algorithm with the combination, according to same algorithm, of the reference vibration data and reference absorption data, which indicate the predetermined working condition of the rectification tool (11) in contact with the panels.

5. A machine for rectifying panels for construction according to any one of the preceding claims, wherein the vibration sensor (64) is mounted on the movement mechanism (40) of the at least one rectification tool (11).

6. A machine for rectifying panels for construction according to claim 4, wherein the movement mechanism (40) comprises a movement motor (46) for moving the rectification tool (11) in the adjustment direction (T), the at least one vibration sensor (64) being mounted on the movement motor (46).

7. A machine for rectifying panels for construction according to any one of the preceding claims, wherein the movement mechanism (40) comprises a gear mechanism of the type with a helical toothed wheel (42) and endless screw (44).

8. A machine for rectifying panels for construction according to claim 7, wherein the helical toothed wheel (42) is formed on the external covering of a tubular metal pipe (48) which is coaxial with a cylindrical member (56) which is connected with screws to the tubular metal pipe (48) and is movable in the adjustment direction (T), the cylindrical member (56) supporting in terms of rotation a shaft (32) which supports the rectification tool (11) which is connected to a motor (34) which is supported by the cylindrical member (56).

9. A method for adjusting the position of at least one rectification tool (11) of a machine (1) for rectifying panels for construction, such as panels and tiles for wall coverings or for floorings, wherein the at least one rectification tool (11) is configured to operate on the panels and is movable in an adjustment direction (T) in order to compensate for the progressive wear of the rectification tool (11) in contact with the panels, and wherein the machine comprises at least one vibration sensor (64) which is associated with the at least one rectification tool (11), comprising the steps of:
- detecting via the at least one vibration sensor (64) the vibrations of the at least one rectification tool (11) during use, during the contact with the panels,
- comparing the vibration data which are thereby detected with reference vibration data which indicate a predetermined working condition of the rectification tool during contact with the panels, corresponding to a predetermined position of the rectification tool,
- outputting an adjustment activation instruction for moving the rectification tool (11) in the adjustment direction (T) towards the panels when a first predetermined deviation between the vibration data which are detected by the vibration sensor with respect to the reference vibration data is exceeded, and
- outputting an adjustment deactivation instruction for interrupting the movement of the rectification tool (11) in the adjustment direction (T) when the deviation between the vibration data which are detected by the vibration sensor and the reference vibration data is within a second predetermined deviation.

10. A method according to claim 9, comprising the additional step of detecting the absorption of an electric actuation motor (34) for the at least one rectification tool (11) and outputting the adjustment activation instruction if the absorption of the electric motor is less than a predetermined absorption threshold and/or outputting the adjustment interruption instruction if a predetermined absorption threshold is exceeded.

11. A method according to claim 10, wherein the vibration data which are detected by the at least one vibration sensor (64) and the absorption data of the electric motor (34) of the same rectification tool (11) are combined in a predetermined manner and compared with a value resulting from a corresponding combination of the reference vibration data and reference absorption data which indicate the predetermined working condition of the rectification tool (11) in contact with the panels.

12. An electronic processor which is configured to carry out the method according to any one of claims 9 to 11 in a machine for rectifying panels for construction.
